# EUROPÄISCHE PATENTSCHRIFT

(11) **EP 1 744 257 B1**
(45) Veröffentlichungstag und Bekanntmachung des Hinweises auf die Patenterteilung: **29.08.2007**
(21) Anmeldenummer: 05015324.6
(22) Anmeldetag: 14.07.2005
(51) Int. Cl.: G06F 17/30, H04L 29/14, H04L 29/08, H04L 29/12

(54) **Vorrichtung und Verfahren zum Abrufen/Speichern von elektronischen Daten in einem System mit mehreren Datenverarbeitungseinheiten**
Apparatus and method for access/storage of electronic data in a system with several data processing entities
Procédé et dispositif pour acceder/mémoriser des données électronique dans un système avec plusieurs entité de traitement de donnée

(43) Veröffentlichungstag der Anmeldung: 17.01.2007
(73) Patentinhaber: Konrad-Zuse-Zentrum für Informationstechnik Berlin, 14195 Berlin (DE); Humboldt-Universität zu Berlin, D-10099 Berlin (DE)
(72) Erfinder: Reinefeld, Alexander, Prof. Dr., 14195 Berlin (DE); Schintke, Florian, 12163 Berlin (DE); Schütt, Thorsten, 12247 Berlin (DE)
(74) Vertreter: Bittner, Thomas L.

(56) Entgegenhaltungen:
- WO-A-20/04027581
- WO-A-20/05057427
- US-A1- 2004 064 556
- US-B1- 6 772 141
- STOICA I ET AL: "CHORD: A SCALABLE PEER-TO-PEER LOOKUP PROTOCOL FOR INTERNET APPLICATIONS" IEEE / ACM TRANSACTIONS ON NETWORKING, IEEE / ACM, NEW YORK, NY, US, Bd. 11, Nr. 1, Februar 2003 (2003-02), Seiten 17-32, XP001144289 ISSN: 1063-6692
- BHARAMBE A R ET AL: "MERCURY: SUPPORTING SCALABLE MULTI-ATTRIBUTE RANGE QUERIES" COMPUTER COMMUNICATION REVIEW, ACM, NEW YORK, NY, US, Bd. 34, Nr. 4, Oktober 2004 (2004-10), Seiten 353-366, XP001224062 ISSN: 0146-4833

## Beschreibung

Die Erfindung betrifft eine Vorrichtung und ein Verfahren zum Abrufen / Speichern von elektronischen Daten in einem System mit mehreren Datenverarbeitungseinheiten, die jeweils eine Funktionalität eines Schreib-Lese-Speichers implementieren.

### Stand der Technik

Die fundamentalen Verfahren, die im Peer-to-Peer (P2P) Computing verwendet werden, haben viele nützliche Eigenschaften, die sie zu idealen Kandidaten für die Basis von großen verteilten Systemen und Grid-Systemen machen: Skalierbarkeit, Fehlertoleranz, Selbstorganisation. In P2P-Systemen verwischt die Grenze zwischen der Rolle eines Nutzers und der eines Dienstleisters. Wenn ein Nutzer einem P2P-System beitritt, wird er auch gleichzeitig als Dienstleister tätig und erhöht damit die Gesamtkapazität des Systems. Dadurch skaliert das System auch, wenn sich die Anzahl der Speicher dynamisch ändert. In P2P-Systemen wird mit Hilfe gleichberechtigter Einzelkomponenten, nämlich Schreib-Lese-Speichern, die kurz auch als Speicher bezeichnet werden können, ein stabiles, zuverlässiges Gesamtsystem realisiert. Die Speicher sind über Kommunikationsverbindungen verbunden und können unabhängig voneinander ohne Vorankündigung ausfallen, was bedeutet, dass sie unzuverlässig sind. Unzuverlässigkeit von Speichern kann entweder durch Kommunikationsfehler verursacht werden, die einen Speicher für andere Speicher nicht mehr erreichbar machen, oder durch einen Fehler oder eine Entscheidung eines Speichers auf Anfragen anderer Speicher nicht mehr zu reagieren. Neue Speicher können jederzeit zum System hinzukommen.

Ein wesentliches Problem im Bereich des P2P-Computing ist es, auf Basis der unzuverlässigen Speicher eine zuverlässige globale Datenstruktur aufzubauen, in der Objekte gespeichert und wieder aufgefunden werden können.

Ein Objekt besteht hierbei aus einem Namen und einer Liste von Attributen. Objekte können beliebige Dinge repräsentieren, zum Beispiel die Adresse oder die Details von Benutzern, Rechnern, Netzwerken, Diensten oder anderen Objekten enthalten. Ein Name kann von einem beliebigen Datentyp sein, ist aber üblicherweise eine Zeichenkette oder eine Zahl. Ein Attribut besteht wiederum aus Attributname und Attributwert, die auch jeweils von beliebigem Datentyp sein können. Objekte, die nicht in dieses Schema passen, lassen sich leicht darauf abbilden, indem der gesamte Inhalt des Objektes als ein Attribut "Inhalt" gespeichert wird. Eine Liste von Attributen zu einem Objekt mit dem Namen "Martin Schmidt" könnte also zum Beispiel folgendermaßen aussehen: ("Vorname", "Martin"), ("Nachname", "Schmidt"), ("Straße", "Bahnhofstraße"), ("Hausnummer", "42"), ("Postleitzahl", "12345"), ("Ort", "Berlin").

Im Folgenden werden zwei Arten von Suchverfahren unterschieden: Namens- und Verzeichnisdienste. Ein Namensdienst bietet eine Abbildung zwischen Namen und Attributen. Der Namensdienst erlaubt es, zu einem gegebenen Namen alle Attribute des dazugehörigen Objektes abzufragen.

Ein Verzeichnisdienst ist das Gegenstück zum Namensdienst. Hier werden Objekte anhand eines oder mehrerer ihrer Attribute gesucht. Das Ergebnis ist eine Liste von Namen. Mit einem Verzeichnisdienst ist es möglich Fragen folgender Art zu beantworten: "Zeige mir alle PDF Dokumente, die auf diesem Rechner gespeichert sind und von Donald Knuth vor 1995 geschrieben wurden." Ein Verzeichnisdienst ähnelt den Gelben Seiten. Microsoft's Active Directory Services, X.500 und die schlankere Variante LDAP sind typische Beispiele.

Um auf mehrere Millionen von Speichern zu skalieren und das Hinzufügen / Entfernen von Speichern zu tolerieren, ohne Funktionalität oder Effizienz einzubüßen, wird ein Verteilungsschema benötigt, das festlegt, auf welchem Speicher oder welchen Speichern welche Objekte gespeichert werden, und ein Routing-Verfahren, das es ermöglicht, die Speicher aufzufinden, die die Objekte gespeichert haben, wenn danach gesucht wird. Hierfür umfasst solch ein System im allgemeinen drei Komponenten: einen Suchprozessor, eine Routing-Schicht und eine Datenbank.

Der Suchprozessor nimmt Anfragen entgegen und bildet die Anfragen auf die darunter liegende Routing-Schicht ab. Einfache Anfragen wie zum Beispiel "Martin Schmidt" werden direkt weitergeleitet, während komplexere Anfrage, wie die oben erwähnte Anfrage nach den PDF-Dokumenten von Knuth, in mehrere Schritte zerlegt werden, die einzeln abgearbeitet werden.

Die Routing-Schicht liegt zwischen dem Suchprozessor und der Datenbank. Sie wird in verteilten Systemen benötigt, um die Speicher aufzufinden, die die benötigten Objekte enthalten. Im Domain Name Service (DNS) des Internet, der zu Computernamen die jeweilige Internetadresse auffindet, ist beispielsweise die Routing-Schicht als Hierarchie von Speichern implementiert. Von einem zentralen Speicher ausgehend verzweigt sich die Zuständigkeit in mehreren Schritten auf andere Speicher bis der Speicher erreicht ist, der das gesuchte Objekt gespeichert hat. In P2P-Systemen werden für das Routing z.B. Chordal-Graphen oder mehr-dimensionale Tori oder Hypercubes herangezogen.

Die Datenbank enthält die eigentlichen Objekte eines Speichers.

Existierende Systeme und Verfahren für das Routing in P2P-Systeme wie Network Flooding (Gnutella), Superpeer Networks (KaZaA, FastTrack), unstrukturiertes Routing mit Caching für anonymes File-Sharing (Freenet), Skip Lists (Chord, DKS), baumartige Datenstrukturen (Kademlia, Pastry, Tapestry), mehr-dimensionale Koordinatenräume (CAN) und einige mehr unterscheiden sich in der Effizienz und Skalierbarkeit untereinander. Insbesondere die Anzahl der Kommunikationen zwischen Speichern über Kommunikationsverbindungen, um Objekte aufzufinden, beeinflusst die Effizienz negativ, je höher sie ist.

Viele aktuelle P2P-Systeme basieren auf verteilten Hash-Tabellen (DHTs) und Chordalgraphen. Beim Speichern eines neuen Objekts wird sein Name mit Hilfe der Hash-Funktion in einen numerischen Wert umgewandelt. Mit dem Routing-Verfahren wird dann der Speicher ermittelt, der für diesen Wert zuständig ist, und anschließend wird das Objekt in die Datenbank in diesen Speicher eingetragen. Das Auffinden von Objekten funktioniert analog: Der Name des gesuchten Objekts wird mit Hilfe der Hash-Funktion in einen numerischen Wert umgewandelt, und der dafür verantwortliche Speicher wird mit dem Routing-Verfahren ermittelt. Aus diesem Speicher kann dann das Objekt aus der Datenbank ausgelesen werden.

Für das Routing-Verfahren hat jeder Speicher eine sogenannte Routing-Tabelle mit Informationen wie andere Speicher kontaktiert werden können. Die Routing-Tabelle hat eine begrenzte Größe und enthält die Kommunikationsverbindungen zu O(log(N)) anderen Speichern, wenn N die Anzahl der Speicher im gesamten System ist.

Die Nutzung einer Hash-Funktion wurde bisher bei den meisten Systemen für notwendig gehalten, um dadurch eine Überlast von Speichern, die für häufige Namen zuständig sind, zu vermeiden, indem die Hash-Funktion die Namen gleichverteilt. Allerdings werden damit sogenannte Bereichsabfragen bei denen nicht der exakte Name, sondern nur ein Präfix des Namens angegeben wird, unmöglich, da Hash-Funktionen nah beieinander liegende Namen im System weit streuen. Zudem basieren diese Systeme auf der Theorie des Consistent Hashing (vgl. D. Karger et al.: "Consistent hashing and random trees: Distributed caching protocols for relieving hot spots on the World Wide Web", In Proceedings of the 29th Annual ACM Symposium on Theory of Computing (El Paso, TX, May 1997), S. 654-663), die die Eigenschaften der Systeme im Bezug auf Effizienz und Skalierbarkeit nur ungenügend berücksichtigt. Ein bekanntes System, das Bereichsabfragen unterstützt, jedoch die Effizienz in Bezug auf die Routing-Leistungsfähigkeit nur mit einer gewissen Wahrscheinlichkeit garantiert, ist Mercury (vgl. A. Bharambe et al.: "Mercury: Supporting Scalable Multi-Attribute Range Queries", SIGCOMM 2004, Portland, August 2004). Der Verwaltungsaufwand in Mercury, um die Routing-Tabellen der Lastverteilung im System dynamisch anzupassen, basiert auf Abschätzungsregeln für die Last anderer Speicher und ist unverhältnismäßig groß.

### Die Erfindung

Aufgabe der Erfindung ist es, eine Vorrichtung und ein Verfahren zum Abrufen / Speichern von elektronischen Daten in einem System mit mehreren Datenverarbeitungseinheiten, die jeweils eine Funktionalität eines Schreib-Lese-Speichers implementieren, bereitzustellen, insbesondere hinsichtlich der Zeitökonomie, auch wenn von den Datenverarbeitungseinheiten einzelne unzuverlässig sind.

Die Erfindung wird durch eine Vorrichtung nach dem unabhängigen Anspruch 1 sowie einem Verfahren nach dem unabhängigen Anspruch 5 gelöst.

Die Erfindung sieht eine Vorrichtung mit einem System von mehreren Datenverarbeitungseinheiten vor, die jeweils einen Schreib-Lese-Speicher zum Aufnehmen / Abgeben von elektronische Daten umfassenden Objekten mit Prozessormitteln und Speichermitteln umfassen, und physikalischen Datenaustauschverbindungen zwischen den mehreren Datenverarbeitungseinheiten, wobei
- in dem System ein virtuelles Netzwerk gebildet ist, in dem die mehreren Datenverarbeitungseinheiten als eine Reihenanordnung mit einer Rangfolge von mehreren Speichern abgebildet sind, in welcher ein erster Speicher benachbart zu einem letzten Speicher angeordnet ist, und bei dem in jedem der mehreren Speicher eine Routing-Tabelle gebildet ist, die elektronische Verweisinformation umfassende Einträge betreffend Kommunikationsverbindungen eines zu der Routing-Tabelle gehörigen Speichers zu anderen der mehreren Speicher aufweist, und
- jedem der mehreren Speicher ein Namensbereich eines geordneten Namensraums für Namen der Objekte zugeordnet ist,
   wobei für jeden Speicher (Sx; x=1, 2, ...; 1 ≤ x ≤ n) der mehreren Speicher (S1, ..., Sn) in dem virtuellen Netzwerk die elektronische Verweisinformation enthaltenden Einträge E_{Sx}[j, i] (1 ≤ i, 1 ≤ j < b) in der zugehörigen Routing-Tabelle wie folgt gebildet sind:
   - Eintrag E_{Sx}[1, 1] =: Verweis auf Kommunikationsverbindung zum in der Rangfolge benachbarten Speicher (Sx+1);
   - Eintrag E_{Sx}[2, 1] =: Eintrag E_{Sx+1}[1, 1]
   - ...:
   - Eintrag E_{Sx}[j, 1] =: Eintrag E_{Sv}[k, 1] in einem weiteren Speicher (Sv), auf den ein Eintrag E_{Sx}[m, 1] in dem Speicher (Sx) verweist, wobei 2 < j < b,
   0 < k, m und k+m=j.
   - Eintrag E_{Sx}[1, i] =: Eintrag E_{Sv}[k, i - 1] in einem weiteren Speicher (Sv), auf den ein Eintrag E_{Sx}[m, i - 1] in dem Speicher (Sx) verweist, wobei 1 < i, 0 < k, m und k+m=b.
   - ...:
   - Eintrag E_{Sx}[j, i] =: Eintrag E_{Sv}[k, i] in einem weiteren Speicher (Sv), auf den ein Eintrag E_{Sx}[m, i] in dem Speicher (Sx) verweist, wobei 2 ≤ j < b, 1 < i, 0 < k, m und k+m=j.

Eine Ausführungsform der Erfindung sieht vor, dass b=2 gewählt ist und für jeden Speicher (Sx; x=1, 2, ...; 1 ≤ x ≤ n) der mehreren Speicher (S1, ..., Sn) in dem virtuellen Netzwerk die elektronische Verweisinformation enthaltenden Einträge E_{Sx}[k] (k=1, 2, ...) in der zugehörigen Routing-Tabelle (302) wie folgt gebildet sind:
- Eintrag E_{Sx}[1] =: Verweis auf Kommunikationsverbindung zum in der Rangfolge benachbarten Speicher (Sx+1);
- Eintrag E_{Sx} [2] =: Eintrag E_{Sx+1}[1];
- ...:
- Eintrag E_{Sx}[m] =: Eintrag E_{Sv}[m-1] in einem weiteren Speicher (Sv), auf den ein Eintrag E_{Sx}[m-1] in dem Speicher (Sx) verweist, wobei 1 < m ≤ k.

Mit der Erfindung werden die positiven Eigenschaften existierender P2P-Systeme bewahrt und mächtigere Abfragemöglichkeiten geschaffen. Es werden stets die Eigenschaften in Bezug auf Effizienz und Skalierbarkeit sichergestellt, indem exakt und nicht auf Wahrscheinlichkeiten basierend gearbeitet wird. Suchanfragen werden mit logarithmischem Aufwand in der Anzahl der Speicher bearbeitet. Sei N die Anzahl der Speicher. Durch das exakte Nutzen und Bestimmen der Einträge in den Routing-Tabellen, das nicht auf Wahrscheinlichkeiten basiert, wie bei bisher existierenden Systemen, werden maximal [log_{b} N], wobei N die Anzahl der Speicher im System ist, viele Kommunikationsverbindungen genutzt, ehe ein gesuchter Speicher gefunden wurde, der ein zugehöriges Objekt gespeichert hat.

Einzelne Speicher können ihre Zuständigkeiten zum Speichern von Objekten im Laufe der Zeit ändern. Mit Hilfe der Erfindung funktioniert das Suchen, wenn Speicher nicht die Zuständigkeiten aller anderen Speicher kennen.

Die einzelnen Speicher können dem System zu beliebigen Zeitpunkten beitreten und es auch wieder verlassen. Wegen des niedrigen Such- und Einfügeaufwandes kann das System praktisch beliebig skaliert werden: selbst mit Millionen unterschiedlicher Speicher können Suchanfragen noch unter Nutzung weniger Dutzend Kommunikationsverbindungen gefunden werden. Da der zur Verfügung stehende Speicherplatz im System die Summe über alle Speicher ist, lassen sich mit modernen Personalcomputern leicht Systeme bauen, die mit Billionen Datensätzen arbeiten können.

### Bevorzugte Ausführungsbeispiele der Erfindung

Die Erfindung wird im Folgenden anhand von Ausführungsbeispielen unter Bezugnahme auf Figuren der Zeichnung näher erläutert. Hierbei zeigen:
- Fig. 1: eine schematische Darstellung eines Systems mit mehreren unabhängigen Speichern, die über Kommunikationsverbindungen verbunden sind;
- Fig. 2: eine schematische Darstellung von Komponenten eines der Speicher aus Fig. 1 im Detail;
- Fig. 3: eine schematische Darstellung, in welcher die mehreren Speicher des Systems aus Fig. 1 auf einem logischen Ring angeordnet und über Kommunikationsverbindungen verbunden sind;
- Fig. 4: eine schematische Darstellung zur Erläuterung einer Suchanfrage in dem System mit den mehreren Speichern aus Fig. 1; und
- Fig. 5: eine schematische Darstellung zur Erläuterung eines Ablaufs beim Füllen einer Routing-Tabelle.

Im Folgenden werden ein Verfahren und eine Vorrichtung zum Speichern und Auffinden von Daten in einem System mit mehreren unabhängigen Datenverarbeitungseinheiten erläutert, die jeweils insbesondere die Funktionalitäten eines Schreib-Lese-Speichers implementieren. Die vorgeschlagene Prozedur nutzt teilweise Konzepte, wie sie in Verbindung mit Chord vorgeschlagen wurden, einer verteilten Hash-Tabelle (vgl. I. Stoica et al.: Chord: a scalable Peer-to-Peer Lookup Protocol for Internet Applications. IEEE / ACM Transactions on Networking. Volume 11, Ausgabe 1. Februar 2003, S. 17 - 32). Chord unterstützt keine Bereichsabfragen. Dieser Nachteil wird mit der Erfindung überwunden. Gleichzeitig bleiben bei dem hier vorgeschlagenen Verfahren die vorteilhaften Eigenschaften von Chord im Bezug auf Effizienz erhalten.

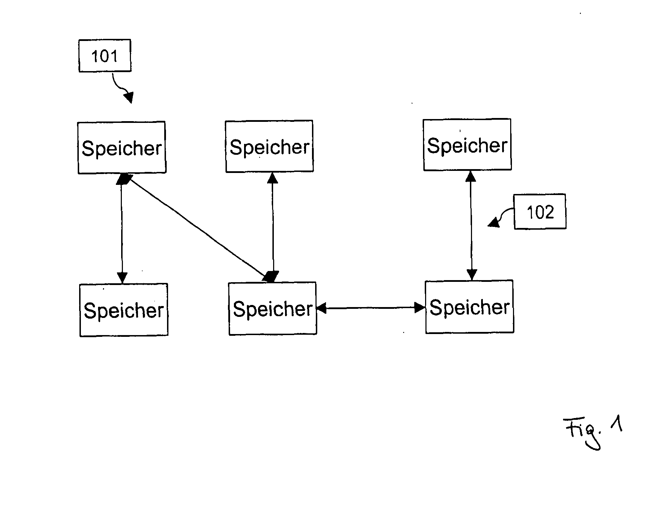

Fig. 1 zeigt eine schematische Darstellung eines Systems, bei dem es sich beispielsweise um ein Computer-Netzwerk handelt, mit mehreren unabhängigen Speichern 101, die als Schreib-Lese-Speicher ausgeführt sind, und Kommunikationsverbindungen 102 zwischen den Speichern 101. Über die Kommunikationsverbindungen 102 können elektronische Daten zwischen der Speichern 101 ausgetauscht werden. Die Gesamtheit der Kommunikationsverbindungen 102 zwischen den Speichern 101 wird als virtuelles Netzwerk ("overlay network") bezeichnet, da die Kommunikationsverbindungen 102 nicht mit den (physikalischen) Kommunikationsverbindungen in dem darunter liegenden physikalischen Netzwerk von Datenverarbeirtungseinrichtungen übereinstimmen müssen. In dem System können Daten in die mehreren Speicher 101 geschrieben und mittels einer Suche zum Auslesen später wieder aufgefunden werden. Da die Speicher 101 als Schreib-Lese-Speicher ausgeführt sind und zwischen ihnen elektronische Daten austauschbar sind, ist in dem System auch die hierfür notwendige Rechnerkapazität zur Verfügung gestellt, beispielsweise mit Hilfe geeigneter Prozessoren.

Wenn ein Speicher dem System von mehreren Speichern 101 hinzugefügt werden soll, muss eine Kommunikationsverbindung zu einem beliebigen der bereits im System vorhandenen Speicher 101 aufgebaut werden. Optional kann mit Hilfe eines Lastbalanzierungsverfahrens ein überlasteter der mehreren Speicher 101 gesucht werden, um direkt von diesem einen Teil des zugeordneten Namensbereiches (vgl. unten) zu übernehmen. Der Namensbereich des überlasteten Speichers wird dann in zwei Teile geteilt. Der zuvor überlastete Speicher und der hinzugefügte Speicher sind fortan jeweils für einen der beiden Teile des Namensbereiches zuständig. Die gespeicherten Objekte des zuvor überlasteten Speichers werden entsprechend auf die beiden Speicher verteilt. Beide Speicher speichern Information lokal für welchen Namensbereich sie fortan jeweils zuständig sind. Anschließend überprüfen beide Speicher den Aufbau einer zugehörigen Routing-Tabelle, die unten im Detail beschrieben wird.

Da die Speicher, die das System mehrerer Speicher 101 bilden, das Verlassen des Systems nicht immer rechtzeitig bekannt geben können, kann dieses Problem mittels regelmäßigen Überprüfens und Erneuerns der Routing-Tabellen gelöst werden.

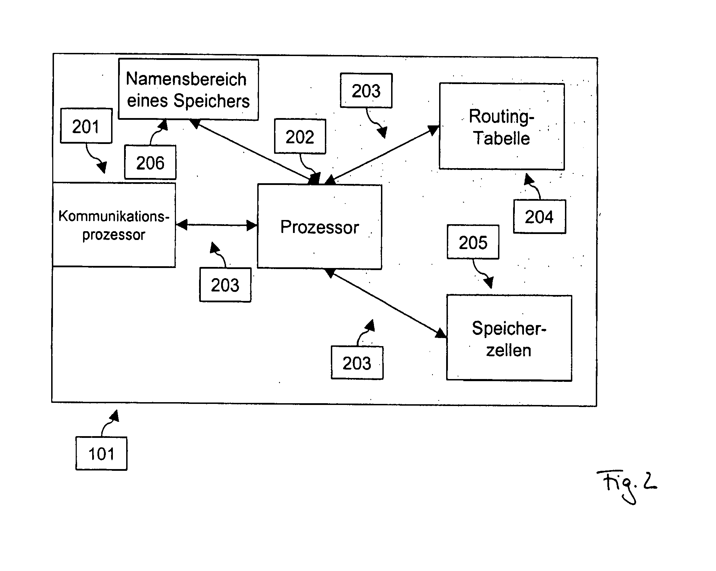

Fig. 2 zeigt eine schematisch Darstellung von Komponenten eines der Speicher 101 in Fig. 1 im Detail. Für gleiche Merkmale werden in Fig. 2 die selben Bezugszeichen wie in Fig. 1 verwendet. Es sind ein Kommunikationsprozessor 201, ein Prozessor 202, interne Kommunikationsverbindungen 203, eine Routing-Tabelle 204, ein Speicher für elektronische Informationen über einen zugeordneten Namensbereich 206 und Speicherzellen 205 vorgesehen. Der Prozessor 202 vermittelt zwischen dem Kommunikationsprozessor 201 und den Speicherzellen 205. Der Kommunikationsprozessor 201 ist für die Kommunikation zwischen den Speichern 101 über die Kommunikationsverbindungen 102 mit anderen Speichern 101 zuständig, für die eine jeweilige Verweisinformation in der Routing-Tabelle 204 gespeichert ist. Der Namensbereich des Speichers 206 ist notwendig, um die Verantwortlichkeiten der mehreren Speicher 101 persistent zu speichern.

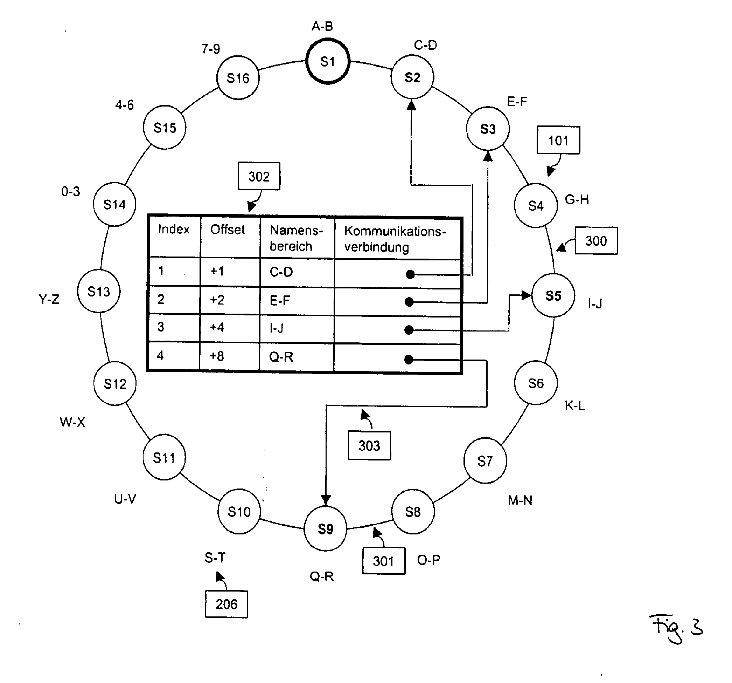

Fig. 3 zeigt eine schematische Darstellung, in welcher die mehreren Speicher 101 des Systems aus Fig. 1 auf einem logischen Ring 300 angeordnet und über Kommunikationsverbindungen 301 verbunden sind, die zum Teil den Kommunikationsverbindungen 102 in Fig. 1 entsprechen. Die mehreren Speicher auf dem Ring 300 sind als Si bezeichnet, wobei i = 1, ..., 16 gilt. Für einen der mehreren unabhängigen Speicher S1 auf dem logischen Ring 300 ist eine zugehörige Routing-Tabelle 302 gezeigt. Die zugehörige Routing-Tabelle 302 enthält Verweisinformationen über weitere Kommunikationsverbindungen 303 zu anderen der mehreren unabhängigen Speicher 101. Gemäß Fig. 3 handelt es sich bei dem Ausführungsbeispiel hier um Verweisinformation auf die Speicher S2, S3, S5 und S9. Der Abstand zwischen zwei Einträgen für die Kommunikationsverbindungen verdoppelt sich bei diesem Ausführungsbeispiel, bis ausgehend von dem Speicher S1, zu welchem die Routing-Tabelle 302 gehört, die Hälfte der übrigen mehreren unabhängigen Speicher 101 im logischen Ring 300 erreicht ist. Fig. 3 zeigt somit ein virtuelles Netzwerk, welches eine geeignete elektronische Abbildung eines zugehörigen physikalischen Computer-Netzwerkes ist, wie es beispielhaft in Fig. 1 gezeigt ist.

Die Suchgeschwindigkeit, die Skalierbarkeit und die Ausfallsicherheit in dem System mehrerer Speicher 101 hängt von der Ausgestaltung der jeweiligen Routing-Tabelle 204 ab, in welcher elektronische Informationen über die Kommunikationsverbindungen 102 zwischen den mehreren Speichern 101 enthalten sind. Die Anzahl der Kommunikationsverbindungen 302, die in der von dem zugehörigen Speicher 101 aufrechterhaltenen Routing-Tabelle eingetragen sind, kann den jeweiligen Anwendungsbedingungen angepasst werden. Wie oben beschrieben, wird der Namensraum logisch als Ring 300 aufgefasst (Fig. 3), d.h. der Beginn und das Ende des Namensraumes sind verbunden oder benachbart. Mittels dieser Ordnung ergibt sich eine natürliche Nachbarschaftsbeziehung zwischen den Namensbereichen der mehreren Speicher 101 / den Speichern S1, ..., S16.

Während bei Chord eine Hash-Funktion auf die Namen der Objekte angewendet wird, um Effizienzeigenschaften mit einer gewissen Wahrscheinlichkeit zu garantieren, wird im hier vorgeschlagenen Verfahren keine Hash-Funktion angewandt, um Namen ordnungserhaltend im logischen Ring 300 abbilden zu können. Dieses ermöglicht erst Bereichsabfragen.

Wenn bei Chord die Hash-Funktion weggelassen würde, verteilen sich die Objekte ungleichmäßig über den Ring, d.h. über die im System zur Verfügung stehenden Speicher für die Daten. Es gibt dann Speicher mit einem Namensbereich, in denen sehr viele Namen eingetragen sind und Speicher mit einem Namensbereich, die weniger belegt sind. Dadurch werden auch die Speicherzellen der Speicher unterschiedlich stark belastet. Wählt man beispielsweise Wörter der deutschen Sprache als Namen, so werden in diesem Fall die Speicherzellen des Speichers, der die Namen mit dem Anfangsbuchstaben "E" bedient, stärker belastet als die Speicherzellen des Speichers, der die Namen mit dem Anfangsbuchstaben "Y" speichert. Diese ungleichmäßige Belastung der Speicher kann durch explizite Lastbalancierung egalisiert werden, indem die Grenzen der Namensbereiche eines Speichers verschoben werden. Beim Routing-Verfahren von Chord wird aber davon ausgegangen, dass die Speicher gleichmäßig verteilt sind. Werden dann die Namensbereiche eines Speichers mittels Lastbalancierung verschoben, reduziert sich im Extremfall die Routing-Performance von O(log N) auf O(N). Ein solches System ist nicht mehr skalierbar. Das hier vorgeschlagene Verfahren überwindet diese Nachteile, indem die Routing-Tabellen der Speicher in neuartiger Weise konfiguriert werden.

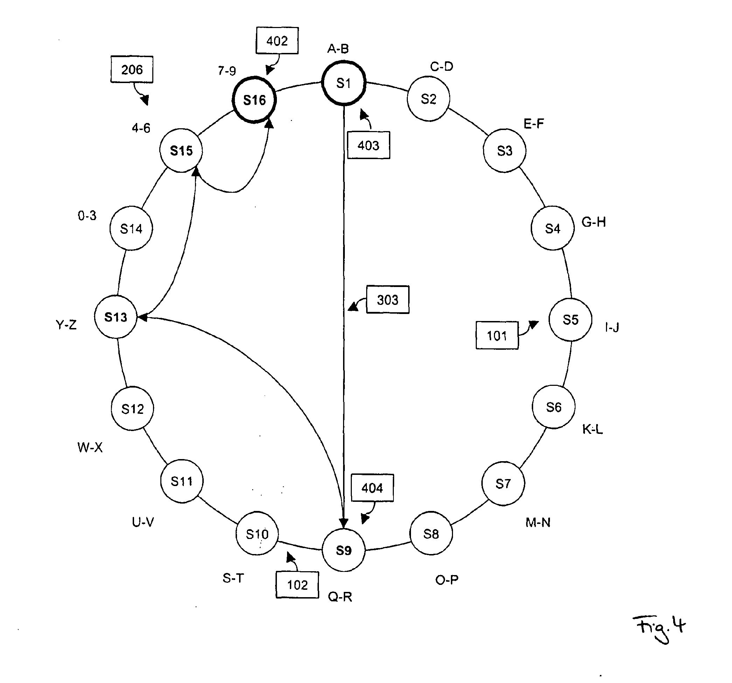

Fig. 4 zeigt eine schematische Darstellung zur Erläuterung einer Suchanfrage in dem gemäß Fig. 3 auf den logischen Ring 300 abgebildeten System von Speichern ist. Die mehreren unabhängigen Speicher S1, ..., S16 haben jeweils einen Namensbereich in einem Namensraum, für den sie zuständig sind.

Jedem Objekt, welches als Menge elektronischer Daten in dem System mit den mehreren Speichern S1, ..., S16 gespeichert ist oder gespeichert werden soll, ist ein Name zugeordnet, über den es gesucht werden kann. Die Menge der gültigen Namen bildet den Namensraum. Auf dem Namensraum ist eine totale Ordnung definiert, d.h. dass für jedes Paar von Namen entschieden werden kann, welcher "kleiner" ist. Dieses ist Voraussetzung, wenn Bereichsabfragen unterstützt werden sollen. Dies kann beispielsweise mittels Interpretation der Bitdarstellung des Namens als binäre Zahl realisiert werden. Sind Namen Zeichenketten, kann beispielsweise auch die lexikographische Ordnung genutzt werden. Wird beispielsweise die Menge aller Farben als Namensraum gewählt, muss nicht definiert werden, ob "nachtblau" kleiner oder größer als "himmelblau" ist. In diesem Fall ist eine künstliche Ordnung ausreichend, zum Beispiel eine Farbtemperatur, oder in anderen Fällen eine lexikographische oder dezimale Dewey-Ordnung.

Der Namensraum wird in kontinuierliche, disjunkte Namensbereiche aufgeteilt, so dass der gesamte Namensraum abgedeckt ist. Jedem der Speicher S1, ..., S16 wird ein solcher Namensbereich zugeordnet. Die Größe dieses Namensbereiches eines Speichers kann beliebig gewählt werden. So können beispielsweise kleine der mehreren Speicher S1, ..., S16 einen weniger großen Namensbereich zugeteilt bekommen als größere. Der erste Namensbereich eines Speichers wird als mit dem letzten Namensbereich eines Speichers verbunden betrachtet. Dadurch bildet die Gesamtheit der Namensbereiche einen virtuellen Ring. Dieser Ring muss sich nicht in dem physikalischen Netzwerk zwischen den Speichern 101 widerspiegeln.

Da sich sowohl die Anzahl der Speicher S1, ..., S16 als auch ihre Anfrage- und Kapazitätslast ändern können, werden die einzelnen Namensbereiche eines Speichers 206 in zeitlichen Intervallen oder bei Bedarf neu angepasst, sowohl in Anzahl als auch Größe. Bemerkt einer der Speicher S1, ..., S16 beispielsweise, dass er eine zu hohe Last hat, d.h. seine noch nicht belegten Speicherzellen 205 werden knapp, initiiert er einen Lastausgleich. Welches konkrete Verfahren für den Lastausgleich genutzt wird, ist für das hier beschriebene Verfahren nicht von Bedeutung. Beispielsweise kann ein Teil des Namensbereiches, für den ein überlasteter der mehreren Speicher S1, ..., S16 zuständig ist, an einen im logischen Ring 300 benachbarten Speicher abgegeben werden.

Sowohl eine Einfüge- als auch eine Such-Operation besteht aus dem Auffinden desjenigen der Speicher S1, ..., S16 mit dem gesuchten Objekt, bei dem der Name des gesuchten Objektes in den Namensbereich dieses Speichers fällt, und dem Zugriff über eine der Kommunikationsverbindungen 102 zu diesem Speicher mit dem gesuchten Objekt.

Jeder der Speicher S1, ..., S16, die den mehreren Speicher 101 in Fig. 1 entsprechen, kann für ein Objekt sowohl eine Such- als auch eine Einfüge-Operation über die Kommunikationsverbindungen 102, die in Fig. 3 mittels der Kommunikationsverbindungen 301 und der weiteren Kommunikationsverbindungen 303 dargestellt sind, und den Kommunikationsprozessor 201 ausführen. Wenn eine Datenverarbeitungseinheit außerhalb des Systems mit den mehreren Speichern 101 eine solche Operation ausführen möchte, benötigt sie eine Kommunikationsverbindung zu einem der Speicher 101, der die Operation dann stellvertretend durchführt. Der stellvertretende Speicher kann nach verschiedenen Gesichtspunkten wie beispielsweise Speicherauslastung oder räumliche Nähe ausgewählt werden.

Es können zwei Arten von Suchen durchgeführt werden:
a) Der Name des zu suchenden Objekts ist bekannt.
b) Es ist nur ein Namensbereich bekannt, in dem der Name des zu suchenden Objekts liegt (Bereichsabfrage).

Eine Suchanfrage nach einem Objekt mit dem Namen "8-Test" startet gemäß Fig. 4 von einem suchenden Speicher 403 (S1), von dem die Suche ausgeht und der anhand seiner zugehörigen Routing-Tabelle 302 (vgl. Fig. 3) entscheidet, die Suchanfrage über eine der weiteren Kommunikationsverbindungen 303, die in der Routing-Tabelle 204 eingetragen ist, an den Speicher S9, der bei der Suche unter Nutzung der weiteren Kommunikationsverbindung 303 erreicht wird, weiterzureichen. Bei der Entscheidung, an wen die Anfrage weitergeleitet werden soll, wird die Routing-Tabelle 302 verwendet. Im Allgemeinen wird die Anfrage an den Speicher weitergeleitet, der (i) auf dem virtuellen Ring 300 dem Speicher mit dem gesuchten Objekt (S16) am nächsten ist und (ii) in der Routing-Tabelle 302 eingetragen ist. Der Abstand zwischen zwei der Speicher S1, ..., S 16 wird im Uhrzeigersinn oder gegen den Uhrzeigersinn gemessen und ist proportional zu der Anzahl der dazwischen liegenden Namen.

Auf diese Weise wird der logische Ring 300 beim Weiterleiten an den Speicher S9 halbiert. Der Speicher S9 nutzt ihm zur Verfügung stehende Informationen über den logischen Ring 300. Konkret kann der Speicher S9 auf elektronische Informationen zurückgreifen, dass der Name "8-Test" in der zweiten Ringhälfte mit den Speichern S9 bis S 16 liegt. Deshalb wird gemäß einer in der Routing-Tabelle zum Speicher S9 enthaltenen Verweisung über eine Kommunikationsverbindung auf den Speicher S 13 gesprungen. Der Speicher S 13 und weitere der mehreren unabhängigen Speicher S1, ..., S16 verfahren analog, bis die Suchanfrage bei dem Speicher S16 mit dem gesuchten Objekt angekommen ist, der das gesuchte Objekt in seinen Speicherzellen 205 (vgl. Fig. 2) gespeichert hat und das Objekt an den suchenden Speicher 403 (S 1) zurückschickt.

Bereichsanfragen basieren auf den einfachen Suchen. Sollen zum Beispiel alle Objekte, deren Namen zwischen A und C liegen, gesucht werden, werden zunächst die Speicher gesucht, die für A / C zuständig sind. Anschließend werden alle Speicher, die auf dem virtuellen Ring 300 zwischen diesen beiden Speicher liegen, nach den Objekten befragt, deren Namen zwischen A und C liegen.

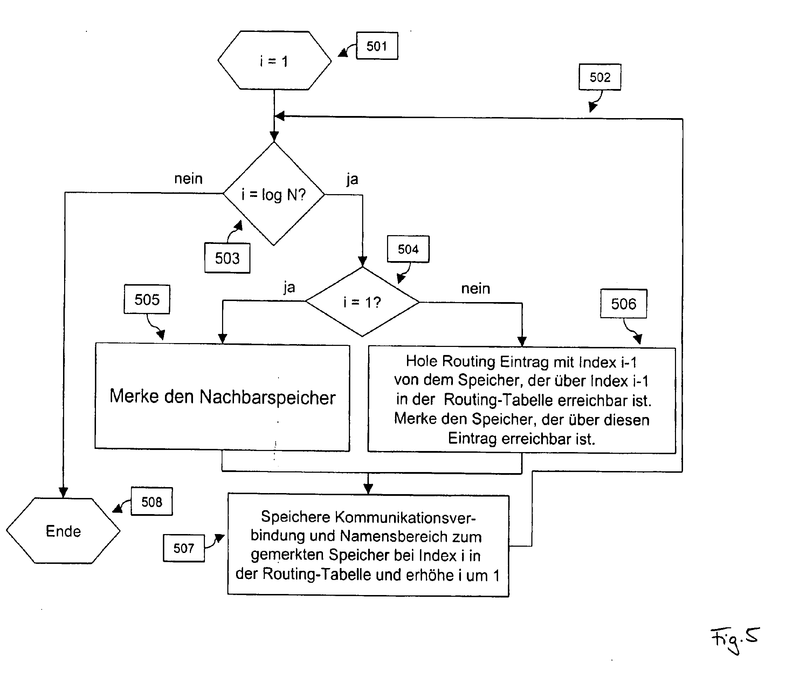

Fig. 5 zeigt eine schematische Darstellung zur Erläuterung eines Ablaufs beim Füllen einer Routing-Tabelle 204 durch den Prozessor 202 (vgl. Fig. 2). Der Ablauf beginnt mit einer Initialisierung eines Zählers 501. Der Zähler kontrolliert, wie oft eine Schleife 502 durchlaufen wird. Jeder Schleifendurchlauf beginnt mit der Überprüfung auf Abbruch einer Schleife 503, anschließend findet eine Überprüfung 504 statt, ob es sich um einen ersten Schleifendruchlauf handelt. Handelt es sich um den ersten Schleifendurchlauf, besteht der folgende Schritt aus dem Merken 505 der Kommunikationsverbindung zum Nachbarspeicher, im anderen Fall besteht der Schritt aus dem Merken 506 der Kommunikationsverbindung zum Speicher mit dem doppelten Abstand. Den Abschluß bildet das Speichern 507 der gemerkten Kommunikationsverbindung in der Routing-Tabelle. Wenn das Verfahren beim Ende 508 ankommt, wird die Ausführung abgebrochen.

Zunächst ist nur der Nachbarspeicher im Uhrzeigersinn (das Verfahren funktioniert analog auch gegen den Uhrzeigersinn) bekannt. Erläutert werden soll hier zunächst das Verfahren mit b = 2. Die k Einträge in der Routing-Tabelle werden beginnend beim Index 1 durchnumeriert. Der erste Tabelleneintrag ist immer der erwähnte direkte Nachbar. Die folgenden Einträge werden jeweils mit Hilfe der vorherigen Einträge berechnet. Um einen Eintrag mit dem Index m in der Routing-Tabelle eines Speichers Sx zu berechnen, wird der Eintrag davor, also mit dem Index m-1 des Speichers Sx, genutzt. Über die dazugehörende Kommunikationsverbindung, die in der Routing-Tabelle eingetragen ist, wird ein Speicher Sy gefragt, welcher Speicher über die in seiner zugehörigen Routing-Tabelle mit dem Index m-1 eingetragene Kommunikationsverbindung erreicht wird. Sei dies ein Speicher Sz. Eine Kommunikationsverbindung zu genau diesem Speicher Sz wird dann an Position m des ursprünglichen Speichers Sx eingetragen, was wie folgt zusammengefasst werden kann:
- Eintrag E_{Sx}[1] =: Verweis auf Kommunikationsverbindung zum in der Rangfolge benachbarten Speicher (Sx+1);
- Eintrag E_{Sx} [2] =: Eintrag E_{Sx+1}[1];
- ...:
- Eintrag E_{Sx}[m] =: Eintrag E_{Sv}[m-1] in einem weiteren Speicher (Sv), auf den ein Eintrag E_{Sx}[m-1] in dem Speicher (Sx) verweist, wobei 2 < m ≤ k.

Auf diese Weise werden die in den Routing-Tabellen der Speicher verteilten elektronischen Informationen genutzt. Ein Speicher nahe dem Anfrageziel, in welchem der Name des gesuchten Objekts abgelegt ist, besitzt genauere Informationen über die Verteilung der Speicher in seiner unmittelbaren Umgebung als der suchende Speicher. Auf diese Weise ermöglicht die hier beschriebene Erfindung, die bei Chord und anderen P2P-Systemen verwendete Hash-Funktion einzusparen, ohne dessen positiven Eigenschaften wie Skalierbarkeit, Fehlertoleranz oder dergleichen zu verlieren.

Tabelle 1 zeigt beispielhaft zumindest einen Teil des Aufbaus einer Routing-Tabelle für einen der Speicher 101. Der Eintrag "aktueller Speicher + 16" ist als der 16. Nachbar des aktuellen Speichers zu lesen, zusätzlich wird zu jedem der Speicher 101 der zugehörige Namensbereich gespeichert. Mit diesem Verfahren lässt sich jeder der Speicher 101 im Durchschnitt unter Nutzung einer Anzahl von 0.5 log₂ N der Kommunikationsverbindungen 102 finden, wobei N die Gesamtanzahl der mehreren Speicher 101 im System ist.

**Tabelle 1**

| | Routing-Einträge (offset=1) | |
|---|---|---|
| Index | Kommunikationsverbindung | Namensbereich |
| 1 | Aktueller Speicher + 1 | zugehöriger Namensbereich |
| 2 | Aktueller Speicher + 2 | zugehöriger Namensbereich |
| 3 | Aktueller Speicher + 4 | zugehöriger Namensbereich |
| 4 | Aktueller Speicher + 8 | zugehöriger Namensbereich |
| ... | ... | ... |
| k | Aktueller Speicher + 2^{k-1} | zugehöriger Namensbereich |

Das Verfahren funktioniert auch mit anderen Topologien wie zum Beispiel "Hypercubes", "space-filling curves", hierarchischen Ringen oder mehrdimensionalen Tori. Je mehr Kommunikationsverbindungen ein Speicher in seiner zugehörigen Routing-Tabelle gespeichert hat, desto größer die Effizienz.

Tabelle 2 zeigt dies beispielhaft, indem es die Anzahl der Kommunikationsverbindungen in der Routing-Tabelle jedes Speichers im System erhöht und dadurch die Anzahl der genutzten Kommunikationsverbindungen für eine Suche auf durchschnittlich 0.5 log₄ N reduziert. Für Systeme, die durchschnittlich 0.5 log_{b} N Kommunikationsverbindungen 102 nutzen, um Objekte zu finden oder zu speichern, wird die Routing-Tabelle 204 auf b-1 Spalten und log_{b} N Zeilen erweitert. Der j-ste Eintrag in der i-ten Zeile zeigt dann auf den j·bⁱ⁻¹-ten Nachbarn des aktuellen Speichers 101 (1 ≤ i ≤ ┌log_{b} n┐, 1 ≤ j < b, 1 < b), was der oben gewählten Schreibweise entsprechend wie folgt zusammengefasst werden kann:
- Eintrag E_{Sx}[1, 1] =: Verweis auf Kommunikationsverbindung zum in der Rangfolge benachbarten Speicher (Sx+1);
- Eintrag E_{Sx}[2, 1] =: Eintrag E_{Sx+1}[1,1]
- ...:
- Eintrag E_{Sx}[j, 1] =: Eintrag E_{Sv}[k, 1] in einem weiteren Speicher (Sv), auf den ein Eintrag E_{Sx}[m, 1] in dem Speicher (Sx) verweist, wobei 2 < j < b,
0 < k, m und k+m=j;
- Eintrag E_{Sx}[1, i] =: Eintrag E_{Sv}[k, i - 1] in einem weiteren Speicher (Sv), auf den ein Eintrag E_{Sx}[m, i - 1] in dem Speicher (Sx) verweist, wobei 1 < i, 0 < k, m und k+m=b;
- ...:
- Eintrag E_{Sx}[j, i] =: Eintrag E_{Sv}[k, i] in einem weiteren Speicher (Sv), auf den ein Eintrag E_{Sx}[m, i] in dem Speicher (Sx) verweist, wobei 2 ≤ j < b, 1 < i, 0 < k, m und k+m=j.

Wenn für einen Eintrag mehrere alternative Verfahren existieren, d.h. mehrere Lösungen für k+m=j bzw. k+m=b existieren, können die Ergebnisse der unterschiedlichen Verfahren verglichen werden und zur Überprüfung der Korrektheit der Einträge genutzt werden. Wenn die Ergebnisse voneinander abweichen, ist mindestens einer der beteiligten Einträge falsch. In diesem Fall können die zur Berechnung genutzten Einträge selbst neu berechnet werden oder auf die gleiche Art überprüft werden.

**Tabelle 2**

| Index | Routing-Einträge offset=1) | | Routing-Einträge (offset=2) | | Routing-Einträge (offset=3) | |
|---|---|---|---|---|---|---|
| | Kommunikationsverbindung | Namensbereich | Kommunikationsverbindung | Namensbereich | Kommunikationsverbindung | Namensbereich |
| 1 | Aktueller Speicher + 1 | zugehöriger Namensbereich | Aktueller Speicher + 2 | zugehöriger Namensbereich | Aktueller Speicher + 3 | Zugehöriger Namensbereich |
| 2 | Aktueller Speicher + 4 | zugehöriger Namensbereich | Aktueller Speicher + 8 | zugehöriger Namensbereich | Aktueller Speicher + 12 | zugehöriger Namensbereich |
| 3 | Aktueller Speicher + 16 | zugehöriger Namensbereich | Aktueller Speicher + 32 | Zugehöriger Namensbereich | Aktueller Speicher + 48 | zugehöriger Namensbereich |
| 4 | Aktueller Speicher + 64 | zugehöriger Namensbereich | Aktueller Speicher + 128 | Zugehöriger Namensbereich | Aktueller Speicher + 192 | zugehöriger Namensbereich |
| 5 | Aktueller Speicher + 256 | zugehöriger Namensbereich | Aktueller Speicher + 512 | zugehöriger Namensbereich | Aktueller Speicher + 768 | zugehöriger Namensbereich |
| ... | ... | ... | ... | ... | ... | ... |
| k | Aktueller Speicher + offset*4^{k} | zugehöriger Namensbereich | Aktueller Speicher + offset*4^{k} | zugehöriger Namensbereich | Aktueller Speicher + offset*4^{k} | zugehöriger Namensbereich |

Beim Starten des virtuellen Netzes werden zunächst viele Einträge keine oder falsche Einträge enthalten, außer diejenigen zu den direkten benachbarten Speichern mit Index 1. Passen dann zunächst alle Speicher die Einträge mit Index 2, danach die mit Index 3 usw. an, sind anschließend alle Einträge in der Routing-Tabelle richtig gesetzt. Während das System läuft, werden neue Speicher 101 hinzukommen und alte sich entfernen, wodurch die Einträge immer wieder aktualisiert werden müssen. Die Aktualisierungen können in periodischen zeitlichen Abständen oder auf Grund bestimmter Ereignisse durchgeführt werden, beispielsweise wenn eine Suche durchschnittlich mehr als 0.5 log_{b} N Schritte benötigen.

Optional können die Suchoperationen genutzt werden, um die Informationen in den Routing-Tabellen zu aktualisieren. Im Folgenden wird dabei angenommen, dass die gesuchten Objekte auf dem gleichen Weg zurückgegeben werden, wie er zur Suche beschritten wurde, also nicht direkt. Wenn zum Beispiel der Prozessor 202 (vgl. Fig. 2) eines Speichers Sx entscheidet, die aktuelle Suchanfrage an den Speicher Sy weiterzuleiten, der an i-ter Stelle in seiner zugehörigen Routing-Tabelle 204 steht, kann er diese Information beim Weiterleiten mitgeben. Wenn die gesuchten Objekte gefunden wurden und über den gleichen Weg zurückgegeben werden, kann der Speicher Sy den i-ten Eintrag aus seiner zugehörigen Routing-Tabelle 204 an den Speicher Sx weiterreichen, den der Speicher Sx nutzt, um seine Routing-Tabelle 204 an der Stelle i+1 zu aktualisieren. Dieses Verfahren erhöht den Aufwand für Suchanfragen unwesentlich und aktualisiert die Routing-Einträge automatisch.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

### Bezugszeichenliste 0 5.

- 101: Speicher
- 102: Kommunikationsverbindung
- 201: Kommunikationsprozessor
- 202: Prozessor
- 203: interne Kommunikationsverbindung
- 204: Routing-Tabelle
- 205: Speicherzellen
- 206: Namensbereich eines Speichers
- 300: logischer Ring
- 301: Kommunikationsverbindung zwischen Speichern S1, ..., S16
- 302: Routing-Tabelle eines Speichers S 1
- 303: Kommunikationsverbindung zwischen Speichern S1, ..., S16, die in einer Routing-Tabelle eingetragen sind
- 402: Speicher mit einem gesuchten Objekt
- 403: suchender Speicher
- 404: Speicher, der bei der Suche unter Nutzung einer Kommunikationsverbindung erreicht wird
- 501: Initialisierung eines Zählers
- 502: Schleife
- 503: Überprüfung auf Abbruch einer Schleife
- 504: Überprüfung, ob es sich um einen ersten Schleifendurchlauf handelt
- 505: Merken der Kommunikationsverbindung zum Nachbarspeicher
- 506: Merken der Kommunikationsverbindung zum Speicher mit dem doppelten Abstand
- 507: Speichern der gemerkten logischen Kommunikationsverbindung in der Routing-Tabelle
- 508: Ende

## Patentansprüche

1. Vorrichtung mit einem System von mehreren Speichern (101), die jeweils einen Schreib-Lese-Speicher zum Aufnehmen / Abgeben von elektronische Daten umfassenden Objekten mit Prozessormitteln (201, 202) und Speichermitteln (205) umfassen, und physikalischen Datenaustauschverbindungen (102) zwischen den mehreren Datenverarbeitungseinheiten (101), wobei
- in dem System ein virtuelles Netzwerk gebildet ist, in dem die mehreren Datenverarbeitungseinheiten (101) als eine Reihenanordnung mit einer Rangfolge von mehreren Speichern (S1, ..., Sn; n>1) abgebildet sind, in welcher ein erster Speicher (S1) benachbart zu einem letzten Speicher (Sn) angeordnet ist, und bei dem in jedem der mehreren Speicher (S1, ..., Sn) eine Routing-Tabelle (302) gebildet ist, die elektronische Verweisinformation umfassende Einträge betreffend Kommunikationsverbindungen (303) eines zu der Routing-Tabelle (302) gehörigen Speichers zu anderen der mehreren Speicher (S1, ..., Sn) aufweist, und
- jedem der mehreren Speicher (S1, ..., Sn) ein Namensbereich (206) eines geordneten Namensraums für Namen der Objekte zugeordnet ist,
**dadurch gekennzeichnet, dass** für jeden Speicher (Sx; x=1, 2, ...; 1 ≤ x ≤ n) der mehreren Speicher (S1, ..., Sn) in dem virtuellen Netzwerk die elektronische Verweisinformation enthaltenden Einträge E_{Sx}[j, i] (1 ≤ i, 1 ≤ j < b) in der zugehörigen Routing-Tabelle (302) wie folgt gebildet sind:
Eintrag E_{Sx}[1, 1 ] = Verweis auf Kommunikationsverbindung zum in der Rangfolge benachbarten Speicher (Sx+1);
Eintrag E_{Sx}[2, 1 ] = Eintrag E_{Sx+1}[1, 1]
...
Eintrag E_{Sx}[j, 1 ] = Eintrag E_{Sv}[k, 1] in einem weiteren Speicher (Sv), auf den ein Eintrag E_{Sx}[m, 1] in dem Speicher (Sx) verweist, wobei 2 < j < b, 0 < k, m und k+m=j.
Eintrag E_{Sx}[1, i] = Eintrag E_{Sv}[k, i - 1] in einem weiteren Speicher (Sv), auf den ein Eintrag E_{Sx}[m, i - 1] in dem Speicher (Sx) verweist, wobei 1 < i, 0 < k, m und k+m=b.
Eintrag E_{Sx}[j, i] = Eintrag E_{Sv}[k, i] in einem weiteren Speicher (Sv), auf den ein Eintrag E_{Sx}[m, i] in dem Speicher (Sx) verweist, wobei 2 ≤ j < b, 1 < i, 0 < k, m und k+m=j.

2. Vorrichtung nach Anspruch 1, **dadurch gekennzeichnet, dass** die zugehörige Routing-Tabelle (302) Einträge E_{Sx}[j, i] enthält, wobei 1 ≤ i ≤ ┌log_{b} n┐, 1 ≤ j < b gilt.

3. Vorrichtung nach Anspruch 1, **dadurch gekennzeichnet, dass** b=2 gewählt ist und für jeden Speicher (Sx; x=1, 2, ...; 1 ≤ x ≤ n) der mehreren Speicher (S1, ..., Sn) in dem virtuellen Netzwerk die elektronische Verweisinformation enthaltenden Einträge E_{Sx}[k] (k=1, 2, ...) in der zugehörigen Routing-Tabelle (302) wie folgt gebildet sind:
Eintrag E_{Sx}[1] = Verweis auf Kommunikationsverbindung zum in der Rangfolge benachbarten Speicher (Sx+1);
Eintrag E_{Sx} [2] = Eintrag E_{Sx+1}[1];
...
Eintrag E_{Sx}[m] = Eintrag E_{Sv}[m-1] in einem weiteren Speicher (Sv), auf den ein Eintrag E_{Sx}[m-1] in dem Speicher (Sx) verweist, wobei 2 < m ≤ k.

4. Vorrichtung nach Anspruch 3, **dadurch gekennzeichnet, dass** die zugehörige Routing-Tabelle (302) Einträge E_{Sx}[1], E_{Sx}[2], ..., E_{Sx}[m] enthält, wobei m= ┌log₂ n┐.

5. Verfahren zum Suchen einer Datenverarbeitungseinheit, um ein elektronische Daten umfassendes Objekt in der Datenverarbeitungseinheit zu speichern / aus der Datenverarbeitungseinheit abzurufen, in einem System von mehreren Datenverarbeitungseinheiten (101), die jeweils einen Schreib-Lese-Speicher zum Aufnehmen / Abgeben des Objektes mit Prozessormitteln (201, 202) und Speichermitteln (205) umfassen, und physikalischen Datenaustauschverbindungen (102) zwischen den mehreren Datenverarbeitungseinheiten (101), wobei
- in dem System ein virtuelles Netzwerk gebildet ist, in dem die mehreren Datenverarbeitungseinheiten (101) als eine Reihenanordnung mit einer Rangfolge von mehreren Speichern (S1, ..., Sn; n>1) abgebildet sind, in welcher ein erster Speicher (S1) benachbart zu einem letzten Speicher (Sn) angeordnet ist, und bei dem in jedem der mehreren Speicher (S1, ..., Sn) eine Routing-Tabelle (302) gebildet ist, die elektronische Verweisinformation umfassende Einträge betreffend Kommunikationsverbindungen (303) eines zu der Routing-Tabelle (302) gehörigen Speichers zu anderen der mehreren Speicher (S1, ..., Sn) aufweist, und
- jedem der mehreren Speicher (S1, ..., Sn) ein Namensbereich eines geordneten Namensraums für Namen der Objekte zugeordnet ist,
wobei bei dem Verfahren eine Suchanfrage nach dem Objekt in dem System erfasst wird und ausgelöst durch die erfasste Suchanfrage anhand der elektronischen Verweisinformation in der Routing-Tabelle (302) die Datenverarbeitungseinheit ermittelt wird, und
wobei für jeden Speicher (Sx; x=1, 2, ...; 1 ≤ x ≤ n) der mehreren Speicher (S1, ..., Sn) in dem virtuellen Netzwerk die elektronische Verweisinformation in den Einträgen E_{Sx}[j, i] (1 ≤ i, 1 ≤ j < b) in der zugehörigen Routing-Tabelle (302) wie folgt gebildet ist:
Eintrag E_{Sx}[1, 1] = Verweis auf Kommunikationsverbindung zum in der Rangfolge benachbarten Speicher (Sx+1);
Eintrag E_{Sx}[2, 1] = Eintrag E_{Sx+1}[1, 1]
...
Eintrag E_{Sx}[j, 1 = Eintrag E_{Sv}[k, 1] in einem weiteren Speicher (Sv), auf den ein Eintrag E_{Sx}[m, 1] in dem Speicher (Sx) verweist, wobei 2 < j < b, 0 < k, m und k+m=j.
Eintrag E_{Sx}[1, i] = Eintrag E_{Sv}[k, i - 1] in einem weiteren Speicher (Sv), auf den ein Eintrag E_{Sx}[m, i - 1] in dem Speicher (Sx) verweist, wobei 1 < i, 0 < k, m und k+m=b.
Eintrag E_{Sx}[j, i] = Eintrag E_{Sv}[k, i] in einem weiteren Speicher (Sv), auf den ein Eintrag E_{Sx}[m, i] in dem Speicher (Sx) verweist, wobei 2 ≤ j < b, 1 < i, 0< k, m und k+m=j.

6. Verfahren nach Anspruch 5, **dadurch gekennzeichnet, dass** die zugehörige Routing-Tabelle (302) Einträge E_{Sx}[i,j] enthält, wobei 1 ≤ i ≤ ┌log_{b} n┐, 1 ≤ j < b.

7. Verfahren nach Anspruch 5, **dadurch gekennzeichnet, dass** b=2 gewählt ist und für jeden Speicher (Sx; x=1, 2, ...; 1 ≤ x ≤ n) der mehreren Speicher (S1, ..., Sn) in dem virtuellen Netzwerk die elektronische Verweisinformation in den Einträge E_{Sx}[k] (k=1, 2, ...) in der zugehörigen Routing-Tabelle (302) wie folgt gebildet ist:
Eintrag E_{Sx}[1] = Verweis auf Kommunikationsverbindung zum in der Rangfolge benachbarten Speicher (Sx+1);
Eintrag E_{Sx} [2] = Eintrag E_{Sx}+1 [1];
...
Eintrag E_{Sx}[m] = Eintrag E_{Sv}[m-1] in einem weiteren Speicher (Sv), auf den ein Eintrag E_{Sx}[m-1] in dem Speicher (Sx) verweist, wobei 2 < m ≤ k.

8. Verfahren nach Anspruch 7, **dadurch gekennzeichnet, dass** die zugehörige Routing-Tabelle (302) Einträge E_{Sx}[1], E_{Sx}[2], ..., E_{Sx}[m] enthält, wobei m = ┌log₂ n┐.

9. Verfahren nach einem der Ansprüche 5 bis 8, **dadurch gekennzeichnet, dass** zumindest ein Teil der Einträge E_{Sx}[k] (k=1, 2, ...) / E_{Sx}[j, i] (1 ≤ i, 1 ≤ j < b, 1 < b) in der zugehörigen Routing-Tabelle (302) in zumindest einem Teil der mehreren Speicher (S1, ..., Sn) aktualisiert werden, wenn eine Datenverarbeitungseinheit dem System hinzugefügt wird.

10. Verfahren nach einem der Ansprüche 5 bis 9, **dadurch gekennzeichnet, dass** zumindest ein Teil der Einträge E_{Sx}[k] (k=1, 2, ...) / E_{Sx}[j, i] (1 ≤ i, 1 ≤ j < b, 1 < b) in der zugehörigen Routing-Tabelle (302) in zumindest einem Teil der mehreren Speicher (S1, ..., Sn) aktualisiert werden, wenn erkannt wird, dass eine Datenverarbeitungseinheit das System verlassen hat.

11. Verfahren nach einem der Ansprüche 5 bis 10, **dadurch gekennzeichnet, dass** die Einträge E_{Sx}[k] (k=1, 2, ...) / E_{Sx}[j, i] (1 ≤ i, 1 ≤j < b, 1 < b) in der zugehörigen Routing-Tabelle (302) in zumindest einem Teil der mehreren Speicher (S1, ..., Sn) in vorgegebenen zeitlichen Abständen aktualisiert werden.

12. Verfahren nach einem der Ansprüche 5 bis 11, **dadurch gekennzeichnet, dass** die Zugehörigkeit zu den Namensbereichen zumindest für einen Teil der mehreren Speicher geändert wird, wenn eine Anzahl von freien Speichermitteln (205) unterschritten wird.

13. Verfahren nach einem der Ansprüche 5 bis 12, **dadurch gekennzeichnet, dass** zumindest ein Teil die Einträge E_{Sx}[k] (k=1, 2, ...) / E_{Sx}[j, i] (1 ≤ i, 1 ≤ j < b, 1 < b) in der zugehörigen Routing-Tabelle (302) automatisch durch Daten, die während Suchoperationen gesammelt werden, aktualisiert werden.

14. Verfahren nach einem der Ansprüche 5 bis 13, **dadurch gekennzeichnet, dass** verschiedene Wertebelegungen von k und m, so dass k + m = b gilt, genutzt werden, um zumindest einen Teil der Einträge E_{Sx}[j, i] (1 ≤ i, 1 ≤ j < b, 1 < b) bei verschiedenen Belegungen auf Gleichheit zu überprüfen und bei Abweichungen zumindest einen Teil der Einträge E_{Sx}[j, i] (1 ≤ i, 1 ≤ j < b, 1 < b) zumindest in einem Teil der mehreren Speicher (S1, ..., Sn) zu aktualisieren.

## Claims

1. Device with a system consisting of a plurality of memories (101), which each comprise a read-write memory for recording / outputting objects comprising electronic data with processor means (201, 202) and storage means (205), and physical data exchange links (102) between the plurality of data processing units (101), wherein
- a virtual network is formed in the system, in which network the plurality of data processing units (101) are provided as a series arrangement with a sequence of a plurality of memories (S1, ..., Sn; n>1), in which a first memory (S1) is arranged next to a last memory (Sn), and in which a routing table (302) is formed in each of the plurality of memories (S1, ..., Sn), which table includes entries comprising electronic reference information concerning communication links (303) between one memory corresponding to the routing table (302) and others of the plurality of memories (S1, ..., Sn), and
- each memory of the plurality of memories (S1, ..., Sn) is assigned a name range (206) of a corresponding ordered name space for names of the objects,
**characterized in that,** for each memory (Sx; x = 1, 2, ...; 1 ≤ x ≤ n) of the plurality of memories (S1, ..., Sn) in the virtual network, the entries E_{Sx}[j, i] (1 ≤ i, 1 ≤ j < b) containing electronic reference information in the corresponding routing table (302) are formed as follows:
entry E_{Sx}[1, 1] = reference to communication link to the memory (Sx+1), which is next in the sequence;
entry E_{Sx}[2, 1] = entry E_{Sx+1} [1,1]
...
entry E_{Sx}[j, 1] = entry E_{Sv}[k, 1] in a further memory (Sv), to which an entry E_{Sx}[m, 1] in the memory (Sx) refers, wherein 2 < j < b, 0 < k, m and k + m =j.
entry E_{Sx}[1, i] = entry E_{Sv}[k, i-1] in a further memory (Sv), to which an entry E_{Sx}[m, i-1] in the memory (Sx) refers, wherein 1 < i, 0 < k, m and k + m = b.
entry E_{Sx}[j, i] = entry E_{Sv}[k, i] in a further memory (Sv), to which an entry E_{Sx}[m, i] in the memory (Sx) refers, wherein 2 ≤ j < b, 1 < i, 0 < k, m and k + m = j.

2. Device according to Claim 1, **characterized in that** the corresponding routing table (302) contains entries E_{Sx}[j, i], wherein 1 ≤ i ≤ ┌log_{b} n┐, 1 ≤ j < b.

3. Device according to Claim 1, **characterized in that** b = 2 is selected and, for each memory (Sx; x = 1, 2, ...; 1 ≤ x ≤ n) of the plurality of memories (S1, ..., Sn) in the virtual network, the entries E_{Sx}[k] (k = 1, 2, ...) containing electronic reference information in the corresponding routing table (302) are formed as follows:
entry E_{Sx}[1] = reference to communication link to the memory (Sx+1), which is next in the sequence;
entry E_{Sx}[2] = entry E_{Sx+1}[1];
...
entry E_{Sx}[m] = entry E_{Sv}[m-1] in a further memory (Sv), to which an entry E_{Sx}[m-1] in the memory (Sx) refers, wherein 2 < m ≤ k.

4. Device according to Claim 3, **characterized in that** the corresponding routing table (302) contains entries E_{Sx}[1], E_{Sx}[2], ..., E_{Sx}[m], wherein m =[log₂ n].

5. Method for searching for a data processing unit in order to store an object comprising electronic data in the data processing unit / to retrieve such an object from the data processing unit, in a system consisting of a plurality of data processing units (101), which each comprise a read-write memory for recording / outputting the object with processor means (201, 202) and storage means (205), and physical data exchange links (102) between the plurality of data processing units (101), wherein
- a virtual network is formed in the system, in which network the plurality of data processing units (101) are provided as a series arrangement with a sequence of a plurality of memories (S1, ..., Sn; n>1), in which a first memory (S1) is arranged next to a last memory (Sn), and, in which in each of the plurality of memories (S1, ..., Sn) a routing table (302) is formed, which table includes entries comprising electronic reference information concerning communication links (303) between one memory corresponding to the routing table (302) and others of the plurality of memories (S1, ..., Sn), and
- each memory of the plurality of memories (S1, ..., Sn) is assigned a name range of a corresponding ordered name space for names of the objects,
wherein, in the method, a search query for the object is detected in the system and, triggered by the detected search query, the data processing unit is determined on the basis of the electronic reference information in the routing table (302), and
wherein, for each memory (Sx; x = 1, 2, ...; 1 ≤ x ≤ n) of the plurality of memories (S1,...,Sn) in the virtual network, the electronic reference information in the entries E_{Sx}[j, i] (1 ≤ i, 1 ≤ j < b) in the corresponding routing table (302) is formed as follows:
entry E_{Sx}[1, 1] = reference to communication link to the memory (Sx+1), which is next in the sequence;
entry E_{Sx}[2, 1] = entry E_{Sx+1}[1, 1]
...
entry E_{Sx}[j, 1] = entry E_{Sv}[k, 1] in a further memory (Sv), to which an entry E_{Sx}[m, 1] in the memory (Sx) refers, wherein 2 < j < b, 0 < k, m and k + m =j.
entry E_{Sx}[1, i] = entry E_{Sv}[k, i-1] in a further memory (Sv), to which an entry E_{Sx}[m, i-1] in the memory (Sx) refers, wherein 1 < i, 0 < k, m and k+m=b
entry E_{Sx}[j, i] = entry E_{Sv}[k, i] in a further memory (Sv), to which an entry E_{Sx}[m, i] in the memory (Sx) refers, wherein 2 ≤ j < b, 1 < i, 0<k, m and k+m=j.

6. Method according to Claim 5, **characterized in that** the corresponding routing table (302) contains entries E_{Sx}[i, j], wherein 1 ≤ i ≤ [log_{b} n], 1 ≤ j < b.

7. Method according to Claim 5, **characterized in that** b = 2 is selected and, for each memory (Sx; x = 1, 2, ...; 1 ≤ x ≤ n) of the plurality of memories (S1, ..., Sn) in the virtual network, the electronic reference information in the entries E_{Sx}[k] (k = 1, 2, ...) in the corresponding routing table (302) is formed as follows:
entry E_{Sx}[1] = reference to communication link to the memory (Sx+1), which is next in the sequence;
entry E_{Sx}[2] = entry E_{Sx+1}[1];
...
entry E_{Sx}[m] = entry E_{Sv}[m-1] in a further memory (Sv), to which an entry E_{Sx}[m-1] in the memory (Sx) refers, wherein 2 < m ≤ k.

8. Method according to Claim 7, **characterized in that** the corresponding routing table (302) contains entries E_{Sx}[1], E_{Sx}[2], ..., E_{Sx}[m], wherein m = [log₂ n].

9. Method according to any one of Claims 5 to 8, **characterized in that** at least a part of the entries E_{Sx}[k] (k = 1, 2, ...)/E_{Sx}[j, i] (1 ≤ i, 1 ≤j < b, 1 < b) in the corresponding routing table (302) are updated in at least a part of the plurality of memories (S1, ..., Sn) when a data processing unit is added to the system.

10. Method according to any one of Claims 5 to 9, **characterized in that** at least a part of the entries E_{Sx}[k] (k = 1, 2, ...)/E_{Sx}[j, i] (1 ≤ i, 1 ≤j < b, 1 < b) in the corresponding routing table (302) are updated in at least a part of the plurality of memories (S1, ..., Sn) when it is detected that a data processing unit has left the system.

11. Method according to any one of Claims 5 to 10, **characterized in that** the entries E_{Sx}[k] (k = 1, 2, ...)/E_{Sx}[j, i] (1 ≤ i, 1 ≤ j < b, 1 < b) in the corresponding routing table (302) are updated in at least a part of the plurality of memories (S1, ..., Sn) at predefined time intervals.

12. Method according to any one of Claims 5 to 11, **characterized in that** the assignment to the name ranges is changed for at least a part of the plurality of memories when there is less than a certain number of free storage means (205).

13. Method according to any one of Claims 5 to 12, **characterized in that** at least a part of the entries E_{Sx}[k] (k = 1, 2, ...)/E_{Sx}[j, i] (1≤ i, 1 ≤ j < b, 1 < b) in the corresponding routing table (302) are updated automatically by data, which are collected during search operations.

14. Method according to any one of Claims 5 to 13, **characterized in that** different values of k and m for which k + m = b are used in order to check the equality of at least a part of the entries E_{Sx}[j, i] (1 ≤ i, 1 ≤ j < b, 1 < b) for different values, and to update at least a part of the entries E_{Sx}[j, i] (1 ≤ i, 1 ≤ j < b, 1 < b) in at least a part of the plurality of memories (S1, ..., Sn) in the event of any differences.

## Revendications

1. Dispositif comprenant un système de plusieurs mémoires (101), qui comportent chacune une mémoire d'écriture/lecture pour la réception/délivrance d'objets comportant des données électroniques avec des moyens de processeur (201, 202) et des moyens de stockage (205), et des liaisons d'échange de données (102) physiques entre les plusieurs unités de traitement de données (101),
- un réseau virtuel étant formé dans le système, dans lequel les plusieurs unités de traitement de données (101) sont reproduites sous la forme d'un agencement en ligne avec une succession de plusieurs mémoires (S1, ..., Sn ; n > 1), dans lequel une première mémoire (S1) est disposée à proximité d'une dernière mémoire (Sn), et dans lequel dans chacune des plusieurs mémoires (S1, ..., Sn) est formé un tableau de routage (302), qui présente des inscriptions comprenant des informations de renvoi électroniques concernant les liaisons de communication (303) d'une mémoire spécifique au tableau de routage (302) avec d'autres des plusieurs mémoires (S1, ..., Sn) , et
- à chacune des plusieurs mémoires (S1, ..., Sn) est attribué un domaine de nom (206) d'un espace de nom attribué pour les noms des objets,
**caractérisé en ce que** pour chaque mémoire (Sx ; x = 1, 2, ... ; 1 ≤ x ≤ n) des plusieurs mémoires (S1, ..., Sn) dans le réseau virtuel, des inscriptions E_{Sx}[j, i] (1≤ i, 1 ≤ j < b) contenant l'information de renvoi électronique dans le tableau de routage (302) spécifique sont formées de la façon suivante :
Inscription E_{Sx}[1, 1] = Renvoi à la liaison de communication avec la mémoire (Sx + 1) voisine dans l'ordre de succession ;
Inscription E_{Sx}[2, 1] = Inscription E_{Sx+1}[1, 1]
Inscription E_{Sx}[j, 1] = Inscription E_{Sv} [k, 1] dans une autre mémoire (Sv), à laquelle renvoie une inscription E_{Sx} [m, 1] dans la mémoire (Sx) , sachant que 2 < j < b, 0 < k, m et k + m = j.
Inscription E_{Sx}[1, i] = Inscription E_{Sv}[k, i - 1] dans une autre mémoire (Sv), à laquelle renvoie une inscription E_{Sx} [m, i - 1] dans la mémoire (Sx), sachant que 1 < i, 0 < k, m et k + m = b.
Inscription E_{Sx}[j, i] = Inscription E_{Sv}[k, i] dans une autre mémoire (Sv), à laquelle renvoie une inscription E_{Sx}[m, i] dans la mémoire (Sx), sachant que 2 ≤ j < b, 1 < i, 0 < k, m et k + m = j .

2. Dispositif selon la revendication 1, **caractérisé en ce que** le tableau de routage (302) spécifique contient des inscriptions E_{Sx}[j, i], sachant que 1 ≤ i ≤ [log_{b} n] , 1 ≤ j < b.

3. Dispositif selon la revendication 1, **caractérisé en ce que** b est choisi égal à 2 et pour chaque mémoire (Sx ; x = 1, 2, ... ; 1 ≤ x ≤ n) des plusieurs mémoires (S1, ..., Sn) dans le réseau virtuel, des inscriptions E_{Sx}[k] (k = 1, 2, ...) contenant l'information de renvoi électronique dans le tableau de routage spécifique (302) sont formées de la façon suivante :
Inscription E_{Sx}[1] = Renvoi à la liaison de communication avec la mémoire (Sx + 1) voisine dans l'ordre de succession ;
Inscription E_{Sx}[2] = Inscription E_{Sx+1}[1] ;
Inscription E_{Sx}[m] = Inscription E_{Sv} [m - 1] dans une autre mémoire (Sv), à laquelle renvoie une inscription E_{Sx}[m-1] dans la mémoire (Sx), sachant que 2 < m ≤ k.

4. Dispositif selon la revendication 3, **caractérisé en ce que** le tableau de routage (302) spécifique contient les inscriptions E_{Sx}[1] , E_{Sx}[2], ..., E_{Sx}[m] , sachant que m = [log₂ n] .

5. Procédé pour chercher une unité de traitement de données, afin de stocker un objet comprenant des données électroniques dans l'unité de traitement électronique ou l'appeler à partir de l'unité de traitement de données, dans un système de plusieurs unités de traitement de données (101), qui comprennent chacune une mémoire d'écriture et de lecture pour la réception/la délivrance de l'objet avec des moyens de processeur (201, 202) et des moyens de stockage (205), et des liaisons d'échange de données (102) physiques entre les plusieurs unités de traitement de données (101), sachant que
- dans le système est formé un réseau virtuel dans lequel les plusieurs unités de traitement de données (101) sont reproduites sous la forme d'un agencement en ligne avec une succession de plusieurs mémoires (S1, ..., Sn ; n > 1), dans lequel une première mémoire (S1) est disposée à proximité d'une dernière mémoire (Sn), et dans lequel, dans chacune des plusieurs mémoires (S1, ..., Sn), un tableau de routage (302) est formé, lequel présente des inscriptions comprenant de l'information de renvoi électronique concernant les liaisons de communication (303) d'une mémoire spécifique au tableau de routage (302) avec d'autres des plusieurs mémoires (S1, ..., Sn), et
- à chacune des plusieurs mémoires (S1, ..., Sn) est attribué un domaine de nom d'un espace de nom ordonné pour des noms des objets,
une demande de recherche de l'objet étant détectée et déclenchée dans le système avec le procédé et l'unité de traitement de données étant déterminée par la demande de recherche détectée à l'aide de l'information de renvoi électronique dans le tableau de routage (302) et, pour chaque mémoire (Sx ; x = 1, 2, ... ; 1 ≤ x ≤ n) des plusieurs mémoires (S1, ..., Sn) dans le réseau virtuel, l'information de renvoi électronique dans les inscriptions E_{Sx}[j, i] (1 ≤ i, 1 ≤ j < b) étant formée de la façon suivante dans le tableau de routage (302) spécifique :
Inscription E_{Sx}[1, 1] = Renvoi à la liaison de communication avec la mémoire (Sx + 1) voisine dans l'ordre de succession ;
Inscription E_{Sx}[2, 1] = Inscription E_{Sx+1} [1, 1]
Inscription E_{Sx}[j, 1] = Inscription Esv[k, 1] dans une autre mémoire (Sv), à laquelle renvoie une inscription Esx [m, 1] dans la mémoire (Sx), sachant que 2 < j < b, 0 < k, m et k + m = j.
Inscription E_{Sx}[1, i] = Inscription E_{Sv}[k, i - 1] dans une autre mémoire (Sv), à laquelle renvoie une inscription E_{Sx}[m, i - 1] dans la mémoire (Sx), sachant que 1 < i, 0 < k, m et k + m = b.
Inscription E_{Sx}[j, i] = Inscription E_{Sv}[k, i] dans une autre mémoire (Sv), à laquelle renvoie une inscription E_{Sx}[m, i] dans la mémoire (Sx), sachant que 2 ≤ j < b, 1 < i, 0 < k, m et k + m = j.

6. Procédé selon la revendication 5, **caractérisé en ce que** le tableau de routage (302) spécifique contient des inscriptions E_{Sx}[i,j] sachant que 1 ≤ i ≤ [log_{b} n] , 1 ≤ j < b.

7. Procédé selon la revendication 5, **caractérisé en ce que** b est choisi égal à 2 et pour chaque mémoire (Sx ; x = 1 ; 2, ... ; 1 ≤ x ≤ n) des plusieurs mémoires (S1, ..., Sn) dans le réseau virtuel, l'information de renvoi électronique dans les inscriptions E_{Sx}[k] (k = 1, 2,...) dans le tableau de routage (302) spécifique est formée de la façon suivante :
Inscription E_{Sx}[1] = renvoie à la liaison de communication avec la mémoire (Sx + 1) voisine dans l'ordre de succession ;
Inscription E_{Sx}[2] = inscription E_{Sx+1} [1] ;
Inscription E_{Sx}[m] = inscription E_{Sv}[m -1] dans une autre mémoire (Sv), à laquelle renvoie une inscription E_{Sx}[m-1] dans la mémoire (Sx) sachant que 2 < m ≤ k.

8. Procédé selon la revendication 7, **caractérisé en ce que** le tableau de routage (302) spécifique concerne les inscriptions E_{Sx} [1], E_{Sx} [2], ..., E_{Sx} [m] , sachant que m = [log₂ n] .

9. Procédé selon l'une quelconque des revendications 5 à 8, **caractérisé en ce qu'**au moins une partie des inscriptions E_{Sx}[k] (k = 1, 2, ...) / E_{Sx}[1, j] (1 ≤ i, 1 ≤ j j < b, 1 < b) dans le tableau de routage (302) spécifique sont actualisées dans au moins une partie de plusieurs mémoires (S1, ..., Sn) lorsqu'une unité de traitement de données est ajoutée au système.

10. Procédé selon l'une quelconque des revendications 5 à 9, **caractérisé en ce qu'**au moins une partie des instructions E_{Sx}[k] (k = 1, 2, ...) / E_{Sx}[j, i] (1 ≤ i, 1 ≤ j < b, 1 < b) dans le tableau de routage (302) spécifique est actualisée dans au moins une partie de plusieurs mémoires (S1, ..., Sn) lorsqu'on détecte qu'une unité de traitement de données a quitté le système.

11. Procédé selon l'une quelconque des revendications 5 à 10, **caractérisé en ce que** les inscriptions E_{Sx}[k] (k = 1, 2, ...) / E_{Sx} [j, i] (1 ≤ i, 1 ≤j < b, 1 < b) dans le tableau de routage (302) spécifique sont actualisées dans au moins une partie de plusieurs mémoires (S1, ..., Sn) à des intervalles de temps prédéfinis.

12. Procédé selon l'une quelconque des revendications 5 à 11, **caractérisé en ce que** l'appartenance aux domaines de nom est modifiée au moins pour une partie des plusieurs mémoires lorsque un nombre de moyens de stockage (205) libres n'est pas dépassé.

13. Procédé selon l'une quelconque des revendications 5 à 12, **caractérisé en ce qu'**au moins une partie des inscriptions E_{Sx}[k] (k = 1, 2, ...) / E_{Sx}[j, i] (1 ≤ i, 1 ≤ j < b, 1 < b) dans le tableau de routage (302) spécifique est actualisée automatiquement par des données qui sont collectées pendant des opérations de recherche.

14. Procédé selon l'une quelconque des revendications 5 à 13, **caractérisé en ce que** différentes occupations de valeur de k et m sont utilisées, de sorte que k + m = b, afin de vérifier au moins une partie des inscriptions E_{Sx}[j, i] (1 ≤ i, 1 ≤ j < b, 1 < b) pour différentes occupations au niveau de l'égalité et, en cas d'écarts, pour actualiser au moins une partie des inscriptions E_{Sx}[j, i] (1 ≤ i, 1 ≤ j < b, 1 < b) au moins dans une partie des plusieurs mémoires (S1, ..., Sn).
